# EUROPEAN PATENT SPECIFICATION

(11) **EP 0 776 696 B1**
(45) Date of publication and mention of the grant of the patent: **19.09.2001**
(21) Application number: 96308652.5
(22) Date of filing: 29.11.1996
(51) Int. Cl.: B01J 20/28, B01J 20/18, C04B 35/80

(54) **Honeycomb-shaped ceramic and method for producing it**
Keramischer Wabenkörper und Verfahren zu dessen Herstellung
Céramique en nid d'abeilles et sa méthode de production

(30) Priority: 01.12.1995 JP 31445695
(43) Date of publication of application: 04.06.1997
(73) Proprietor: Kawata Mfg Co., Ltd., Osaka-shi, Osaka (JP); OSAKA PREFECTURE, Osaka-shi, Osaka (JP)
(72) Inventor: Kawasaki, Jiro, Sanda Fac., Kawata Mgf. Co., Ltd., Sanda-shi, Hyogo (JP); Kaji, Mitsunari Sanda Fac., Kawata Mgf. Co., Ltd., Sanda-shi, Hyogo (JP); Miyamoto, Hiroki, Nara-shi, Nara (JP)
(74) Representative: West, Alan Harry

(56) References cited:
- EP-A- 0 167 324
- EP-A- 0 519 073
- DE-A- 3 738 916
- PATENT ABSTRACTS OF JAPAN vol. 17, no. 533 (C-1114) & JP 05 146676 A (KAWATA), 15 June 1993,
- DATABASE WPI Week 9439 Derwent Publications Ltd., London, GB; AN 94-312959 XP002035081 & JP 06 138 170 A (MATSUDA)
- DATABASE WPI Week 9310 Derwent Publications Ltd., London, GB; AN 93-079570 XP002035082 & JP 05 023 528 A (KAWATA)
- PATENT ABSTRACTS OF JAPAN vol. 10, no. 377 (C-392) & JP 61 171539 A (BABCOCK HITACHI)

## Description

The present invention relates to a honeycomb-shaped ceramic whose major constituent is zeolite and to a method for producing it, and particularly relates to a honeycomb-shaped ceramic having a moisture adsorption property suitable for a drying agent for generating dry air and to a method for producing it.

It is known that zeolite, which has been practically used for adsorption in various fields can be used in a hot-air-circulation type of drying apparatus as a drying agent for drying powder granules containing for example moisture or a low boiling point solvent. In this type drying apparatus, dry air of a relatively high temperature as hot as 50-100°C is circulated, for effective use of it. For generating such a high temperature dry air, two typical systems have been proposed: one of which is a granulation-based system in which granulated drying agent is used and air is passed through packed beds with the drying agent while the packed beds are rotated; and another of which is a honeycomb rotor system in which columnar drying agent, which was specially processed into a honeycomb form, is used, and air is passed through the columnar drying agent, with the drying agent rotated at a speed as slow as 3-10 times an hour, or with a suitable bed selected among several beds of the drying agent, so as to obtain dehumidified air.

In the honeycomb rotor system, the columnar honeycomb rotor (drying agent) is divided into three zones: the first zone through which air to be dried is passed; the second zone through which heated air (hot air) is passed to heat and dehumidify the drying agent as have absorbed moisture of the air; and the third zone through which cold air is passed to cool the drying agent revived by the heat and dehumidification. The air is passed through the zones of the rotating rotor and thereby the dehumidification of the air, and the revival and cooling of the drying agent are made continuously and repeatedly. This system has an advantage of allowing the drying agent to revive easily and being able to obtain dry air with no undesirable variations in dehumidification.

In addition to zeolite, silica gel is also well known as a drying agent to be used in drying apparatuses. Silica gel has a good moisture adsorption capacity at a low temperature, but it does not work enough at a relatively high temperature in the temperature range as mentioned above. Even if the dry air is cooled to raise the moisture adsorption capacity of silica gel, the cooling by water in summer season is limited to around 35°C, at which the moisture adsorption capacity of silica gel is still insufficient. Thus, silica gel does not satisfactorily meet the requirements for the drying agent used in the drying apparatus using the high temperature dry air.

On the other hand, zeolite (molecular sieve), which has a good moisture adsorption capacity at a relatively high temperature as mentioned above, is useful as a drying agent used in a high temperature range, but it has difficulty in workability. Due to the difficulty in workability, zeolite is normally used in a granular form. As the air is passed, the granulated zeolite particles contact with each other and degenerate into powder. Thus, the zeolite in granular form has disadvantages of being short of life and also short of the effective absorption surface area as a drying agent. Therefore, the zeolite is being desired to be improved to have a much larger effective surface area so as to provide an improved dehumidification capacity.

Further, a drying agent, which comprises a honeycomb-shaped, ceramic sheet coated with zeolite powder for enlarging effective adsorption surface area of zeolite, has been proposed and used as a honeycomb rotor. This drying agent requires a special producing process that the ceramic sheet is made into a corrugated board by a special treatment such as a corrugate processing and is then formed into a roll shape so as to form a honeycomb structure, before the zeolite powder is coated on the surface of the honeycomb structure. Due to this, the drying agent disadvantageously has difficulty in workability to lead to a cost increase.

In addition, in a dryer using the honeycomb rotor, the drying agent is repeatedly re-used by reviving it by hot air of about 200 to 250°C and then cooling down the revived drying agent by air of about room temperature. Due to this, the drying agent has additional disadvantages that the zeolite coated on the ceramic sheet may fall off by thermal impact or the like or may be powdered, and so the drying agent is short of durability.

EP-A-0 167 324 discloses a method for extruding silica-rich solids comprising mixing the silica rich-solids with water and alkali metal compounds followed by mulling and extruding the mixture, and subsequently drying the extrudate. The drying step is performed by heating the extrudate which may then be nitrogen calcined, ammonium ion exchanged and then air calcined.

JP-A-5 146 676 discloses a method of producing a ceramic body comprising
i) forming a composition containing an absorptive zeolite, at least one inorganic fiber and an inorganic binding agent;
ii) forming this composition into a honeycomb-like shape; and
iii) drying the honeycomb-like structure;
iv) baking the honeycomb-like structure.

The ceramic body produced has a moisture absorption property suitable for a drying agent for generating dry air. However, the conventional methods of drying and baking the honeycomb-like structure used do not result in a product having uniform structural strength.

It is, therefore an object of the invention to provide a honeycomb shaped ceramic, having good absorptive properties, such as dehumidification capacity as well in durability and structural strength.

It is another object to provide a method for producing the above honeycomb shaped ceramic in a simple and low-cost process.

The present invention relates, in one aspect, to a honeycomb-shaped ceramic formed by:
forming a zeolite-containing composition, containing (a) zeolite, (b) inorganic fiber, and (c) inorganic binder, into a honeycomb shape;
baking the honeycomb-shaped composition under inert and/or reduction atmosphere; and
thereafter baking it under oxidation atmosphere.

The present invention relates, in another aspect, to a method for producing a honeycomb-shaped ceramic, which comprises the steps of:
forming a zeolite-containing composition, containing (a) zeolite, (b) inorganic fiber, and (c) inorganic binder, into a honeycomb shape;
drying the honeycomb-shaped composition;
baking the dried composition under inert and/or reduction atmosphere; and
thereafter baking it under oxidation atmosphere.

Fig. 1 is a perspective view showing the honeycomb-shaped ceramic according to an embodiment of the present invention; and
Fig. 2 is a schematic diagram illustrating a drying process in the method of producing the honeycomb-shaped ceramic of the present invention.

The present invention is described in detail hereinafter.

With the honeycomb-shaped ceramic according to the invention, natural zeolite and synthetic zeolite are both available for (a) zeolite of the zeolite containing composition. Also, commercially available products, such as molecular sieve or those having various compositions which are widely used in the petrochemical field, are available. Preferably, composition in the crystal form containing mainly A-type zeolite (for example the commercially available product sold under the trade mark of SILTON B (made by Mizusawa Kagaku K. K.)) is used. According to the invention, zeolite in the powder form, especially the one having an average particle size of 0.3-10µm, is preferable.

To provide moderate strength for the molding product and prevent occurrence and growth of cracking, (b) an inorganic fiber is used as a reinforcing material for zeolite. Among the inorganic fiber are: non-oxide fiber such as carbon fiber, silicon carbide fiber, boron carbide fiber, boron nitride fiber; oxide fiber such as titanate potassium fiber, zirconia fiber, alumina-boroa silica fiber, alumina-silica fiber and silica fiber; and metallic fiber such as stainless steel fiber, steel fiber, etc.. These inorganic fibers may be used independently or in combination. Among the inorganic fibers, the non-oxide fiber, especially carbon fiber, is desirable.

There is no specific restriction on the carbon fiber. Generally used carbon fibers for a reinforcement for fiber reinforced plastics (FRP) or fiber reinforced ceramic (FRC) are available. Among those carbon fibers are: pitch carbon fiber, rayon carbon fiber, polyacrylonitrile (PAN) carbon fiber, mesoface carbon fiber, gas phase growth carbon fiber. These carbon fibers may take the form of graphitic one which is relatively high in degree of crystallinity, carbonaceous one which is relatively low in degree of crystallinity, or whisker. Additionally, carbon fibers as coated and fortified with other ceramics, such as a SiC coated carbon fiber and the like, may be used.

Preferably, the inorganic fiber whose fiber length is 0.02-2mm and whose fiber diameter is 0.1-20µm is to be selected, though the length and the diameter are dependent on the kinds of fiber and cannot be specified in a wholesale manner.

Further, (c) an inorganic binder is used for zeolite and inorganic fiber to be adequately dispersed and retained in the molding product. Among the inorganic binder are: inorganic sol whose dispersoids are silica, alumina, zirconia, such as silica sol (colloidal silica), alumina sol, silica-alumina sol, and zirconia sol, and/or clay minerals such as kaolin clay such as kaolinite, nakhlite, dickite, halloysite; montmorillonite clay such as montmorillonite, beidellite, nontronite, saponite; formanite clay such as attapulgite, palygorskite, sepiolite; and illite clay.

These inorganic binder may be used independently or in combination. For an inorganic sol, silica sol is desirable; and for clay minerals, formanite clay, especially sepiolite, and/or kaolin clay, especially kaolinite, are desirable. It is further preferable that the inorganic sol and the clay minerals are used in combination. Especially, silica sol and sepiolite and/or kaolinite are used in combination. Desirably, the inorganic sol and clay minerals are combined in the proportions of 10-50 parts by weight clay minerals to 10 parts by weight inorganic sol, in solid contents rate.

In addition, to facilitate the molding of the honeycomb-shaped ceramic according to the invention, organic binders may be used as a component (d) in the zeolite containing composition, as desired.

The organic binders may be selected from known organic binders such as polyvinyl alcohol (PVA), methyl cellulose (MC), carboxymethyl cellulose (CM) and starch.

Preferred amounts of the components of the zeolite containing composition are 30-87 wt.%, of (a) zeolite, 0.5 - 5wt % of (b) inorganic fiber, 15-45 wt.% of (c) inorganic binder, on a solid contents base. More preferred content of (a) zeolite is 55-80 wt.%. This is because since zeolite of less than 55 wt.% is low in absolute moisture adsorption amount when used as an adsorption agent, the honeycomb-shape ceramic must be molded in large size and it may be difficult for the entire device to be downsized. On the other hand, zeolite of more than 80 wt.% causes the strength of the honeycomb-shaped ceramic to be significantly reduced.

Further, a preferred content of the organic binder of the component (d) to 100 parts by weight (hygroscopic moisture basis) of the total amounts of the components (a), (b)and (c) is 0.5 - 10 parts by weight.

The honeycomb-shaped ceramic according to the invention is produced, as described later, by extruding the abovementioned zeolite containing composition into a honeycomb shape, baking the honeycomb-shaped composition under inert and/or reduction atmosphere, and then baking it under oxidation atmosphere.

In the present invention, there is no specific limitation on the method of extruding the zeolite-containing composition. A suitable extrusion molding machine having an extrusion die (mouthpiece) of a desired configuration may be used. The composition is charged into such an extrusion molding machine and is extruded from the molding machine at a speed of preferably 20-1000mm/min.

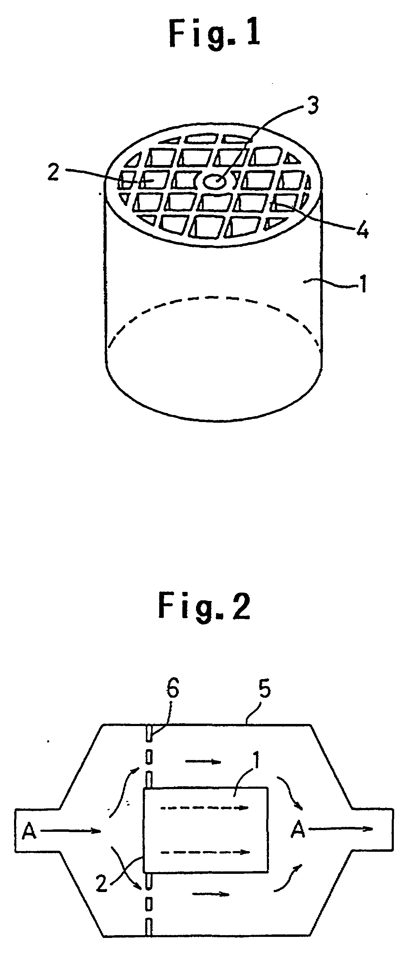

Drying of the extruded product can be made by natural drying at room temperature for about 24 hours or by somewhat heating it up to 50-100°C with hot air or microwave for about 10-30 minutes. Drying with the hot air is the object of the invention. It is the object of the invention that the product is dried by hot air A blown along honeycomb-shaped through holes 2 which are formed along the direction for the molding product 1 to be extruded, as shown in Fig. 2.

In a case where the molding product is dried by the natural drying or by the hot air being blown across or in a direction orthogonal to the honeycomb-shaped through holes 2, the molding product is dried at a different rate at the outside regions and at the inside regions. The outside is dried faster than the inside. Thus, a contraction crack may be produced in the molding product. In contrast to this, in a case where the molding product is dried by the hot air A blown along the through bores 2, since the hot air A is blown along the outside regions of the product 1 and is simultaneously passed through the through holes 2 of the product 1, the molding product is equally dried at the outside regions and the inside regions at substantially the same rate. Thus, the contraction crack in the product can be avoided.

More preferably, a dryer 5 for drying the molding product is provided with slits 6 between an end of the molding product 1 at an upstream side of the hot air A and an inside wall of the dryer 5, as shown in Fig. 2. The slits 6 operate to regulate air quantity passing in the honeycomb-shaped through holes 2 and air quantity passing on the molding product 1, so as to make a more uniform drying. In this case, it is preferable that each slit 6 has an area almost one-half of the cross-sectional area of the through hole 2 at the molding product.

Then, the dried molding product is baked. Specifically, the dried product is baked under inert and/or reduction atmosphere first and then is baked under oxidation atmosphere.

In the baking under the inert and/or reduction atmosphere, the dried product is baked under the atmosphere of inactive gas such as N₂ or Ar or under the atmosphere cut off from air atmosphere by enwrapping the product in aluminum foil and the like, at a temperature of 400-700°C, preferably at a temperature of 460-660°C, for at least twenty minutes by use of an electric furnace and the like.

Further, in the baking under the oxidation atmosphere, the product is put back under air atmosphere by releasing it from the inert-gas-filled atmosphere or by peeling the aluminum foil and the like from the product, and then is baked at a temperature of 400-700°C, preferably at a temperature of 460-660°C, for at least twenty minutes by use of an electric furnace and the like, in the same manner as in the baking under the inert and/or reduction atmosphere.

With the bakings firstly made under the inert and/or reduction atmosphere and then under the oxidation atmosphere, combustible organic components contained in the molding product are carbonized by the baking under inert and/or reduction atmosphere first, and then the combustible organic components as carbonized are removed by the baking under oxidation atmosphere. Thus, the combustible organic components contained in the molding product can be removed without firing. Consequently, the inorganic fiber can be prevented from being burnt down incident to the fire of the combustible organic components, and also the zeolite can be effectively prevented from deterioration in adsorptive capability caused by the excessive temperature rise resulting from the firing. This baking process is particularly effective for the zeolite-containing composition containing (d) organic binder, because of increased proportion of the combustible organic components.

The honeycomb-shaped ceramic produced in this manner has a structure in which the zeolite and the inorganic fiber are uniformly dispersed and retained through the inorganic binder. This structure allows the zeolite to have an improved adsorption surface area to fully exert the moisture adsorption characteristics. Also, the structure has an uniformed density allowing occurrence and growth of cracks to be hindered to provide improved durability and strength for the structure.

In the present invention, the shape and size of the honeycomb-shaped ceramic may be optionally selected according to, for example, the way of use as a drying agent. It is to be noted that, in the present specification, the term "honeycomb-shaped" includes not only the so-called honeycomb shaped (hexagonal) sectional openings but also square, triangular, and other polygonal or circular ones. An example of the drying agent for honeycomb rotor is shown as in Fig. 1. In this example, the columnar, honeycomb-shaped ceramic 1 of drying agent, has a sectional honeycomb structure with a grid pattern defined by a plurality of through holes 2 which are square in cross section and extend in the direction of extrusion of the column to allow the air to freely pass through the holes 2. This drying agent is set in place via an axial hole 3 at the central part to form a honeycomb rotor, via which the cycle of dehumidifying, reviving and cooling is repeated.

The shape and size of the holes 2 of the above ceramic 1 may be selected as desired. In the example, the distance between the centers of adjacent holes 2 is set to be about 2mm, and the thickness of the partition walls 4 defining the holes 2 to be about 0.5mm. These values are of course not limitative. In Fig. 1, the holes 2 are shown in an enlarged manner for simplification of the explanation.

As described above, according to the invention, the composition can be uniformly dried without distortion, with the inorganic fiber, which hinders occurrence and growth of cracks in the ceramic to provide an improved strength, contained uniformly in the composition. Also, the inorganic fiber can be effectively prevented from being burnt down incident to the fire of the combustible organic component in the baking process. Thus, the invention enables the honeycomb-shaped ceramic to be produced in a very simple and low-cost process, and also the honeycomb structure of the resultant honeycomb-shaped ceramic allows the zeolite to have an enlarged adsorption surface area to fully exert the excellent adsorption characteristics. Besides, the produced ceramic with uniformed density can hinder occurrence and growth of cracking to provide improved durability and strength for the structure.

This honeycomb-shaped ceramic is useful for drying agents, especially for adsorbent such as a drying agent for a honeycomb rotor which is for use in repeating the cycle of the reviving by heating and the cooling. The above is taken as an example of the honeycomb-shaped ceramic of the invention being used for a moisture adsorptive agent, and the use is not limited to the moisture adsorption. The honeycomb-shaped ceramic of the invention can be well used for adsorption of Carbon dioxide gas (CO₂), Hydrogen sulfide (H₂S), Ammonia (NH₃), NOx, Mercaptan (R-SH), etc., and is also used for catalysts for disposal of various kinds of gases in automobiles, chemical plants, and the like.

### Examples

The following examples and comparative examples are further illustrative of the invention.

### Example 1

A honeycomb-shaped ceramic illustrated in Fig. 1 (diameter 10cm, height 20cm) was produced in the following manner:

First, there was prepared a zeolite-containing composition comprising 65 parts by weight of zeolite powder, 2 parts by weight of carbon fiber, 15 parts by weight of silica sol (about 20% solid content), 18 parts by weight of sepiolite, and 3 parts by weight of methyl cellulose. The zeolite used is a composition of [Na₂O:SiO_{2:}:Al₂ O₃ = 1:2:1 (molar ratio)], which is known as SILTON B (brand name)(made by Mizusawa Kagaku K.K.), as pulverized into a particle size of 1-4µm.

Next, the composition (10kgs) was supplied to an extrusion molding machine having an extrusion die capable of forming a columnar structure with a grid pattern defined by a plurality of through holes 2 as shown in Fig. 1 and was extruded therefrom at a speed of 200mm/min.

The resulting molding product was dried by blowing hot air as heated to a slightly raised temperature of about 80°C along the honeycomb-shaped through holes 2 for about 20 minutes.

Next, the molding product was enwrapped in aluminum foil and was stood still in a burning furnace (electric furnace). With the temperature of the furnace raised up to 500°C at a temperature raising rate of 2°C/min, the molding product was baked under the inert and/or reduction atmosphere for 20 minutes at the raised temperature. Thereafter, the aluminum foil was removed from the molding product and was further baked under the oxidation atmosphere for about 20 minutes.

After that, the electric supply to the burning furnace was stopped, and the molding product was cooled down at room temperature with its left in the furnace. And, the honeycomb-shaped ceramic 1 as shown in Fig. 1 was obtained.

The ceramic had a good mechanical strength, with the zeolite powder and carbon fiber uniformly dispersed and retained in the silica sol and sepiolite.

Next, performance evaluations on dehumidifying capability and durability of the ceramic 1 was conducted. In the performance evaluations, the ceramic 1 was used as a honeycomb rotor for a granule dryer, and the air of an absolute humidity of 0.010-0.015Kg/Kg was continuously dehumidified for 12 hours. The result was that dry air of 70-90% dehumidification was stably obtained. The rotor was operated at that time under the following conditions:
Temperature of air to be dried: 40-50°C
Temperature of heated air for regeneration: 200-250°C
Temperature of cooling air: 40-50°C
Rotor rotation speed: 10 turns/hour

The above ceramic 1 showed no falling off or degradation or pulverization of zeolite, even after the 700 days use with continuous use of about 12 hours a day. The result is shown in Table 1 summarizing a mixing rate of raw materials and molding conditions. In Table 1, the mixing rates (part by weight) of hygroscopic moisture standards is given in degrees (wt.%) converted to solid content standards.

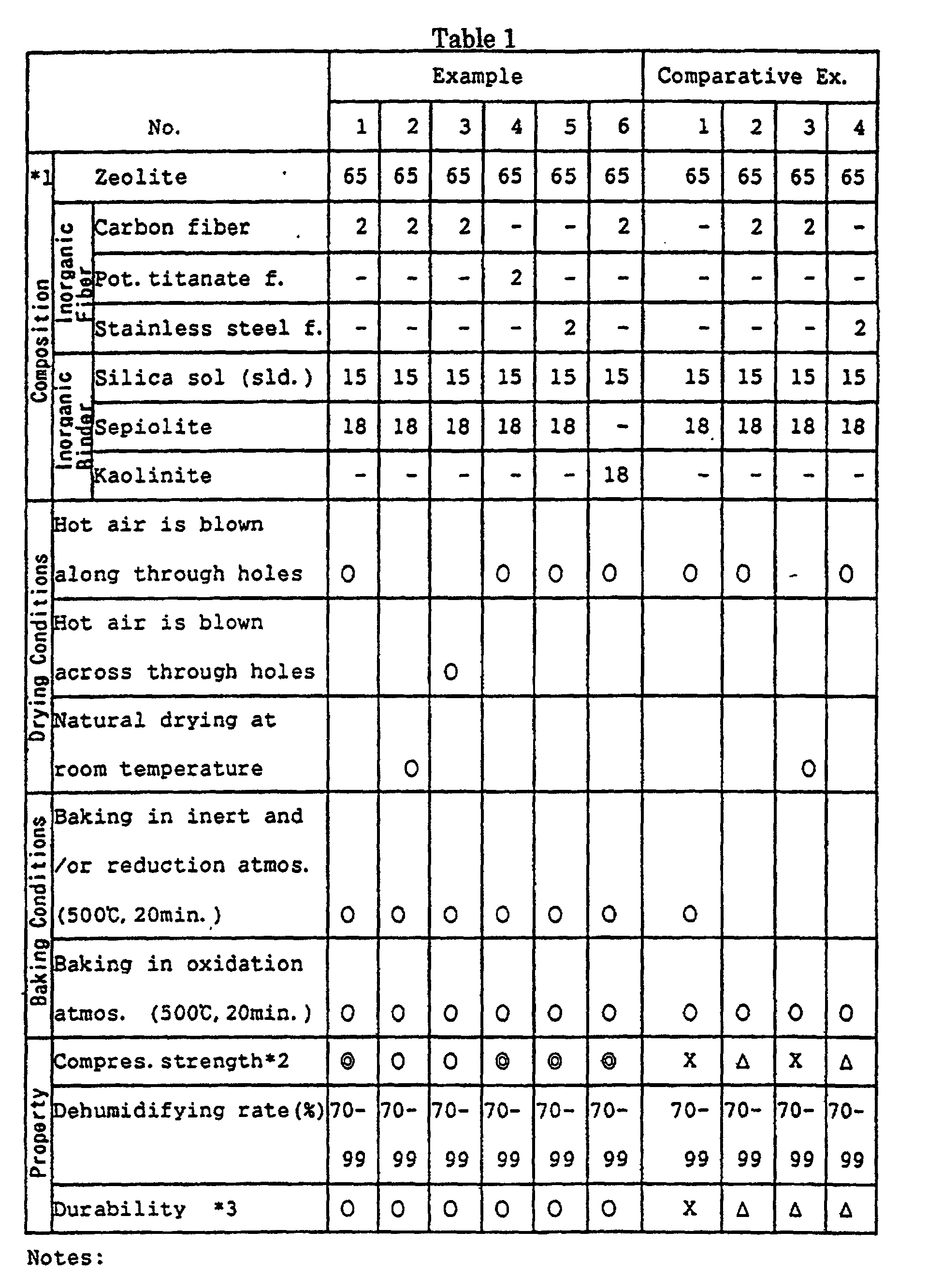

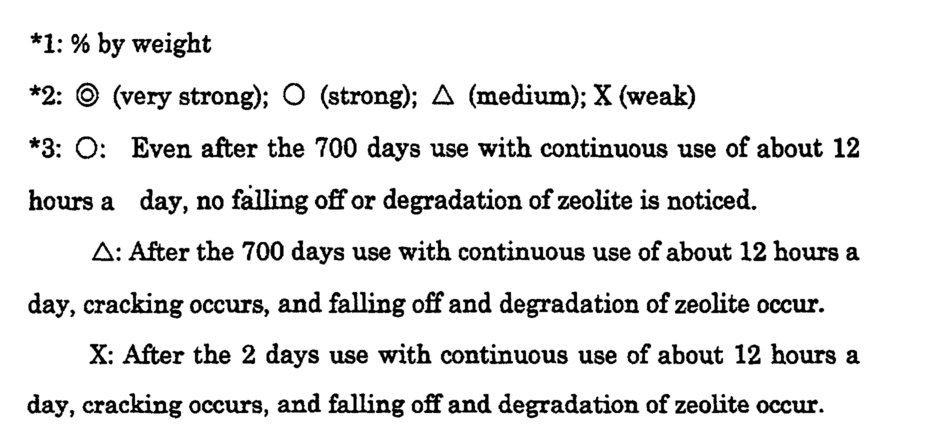

### Example 2

Except a variation in the drying condition that the molding product was dried by itself at room temperature for one day, a honeycomb-shaped ceramic 2 of the present invention was made in the same manner as in Example 1. The performance evaluations on strength, dehumidifying capability and durability of the ceramic are shown in Table 1.

### Example 3

Except a variation in the drying condition that a hot air was blown on the ceramic across or in a direction orthogonal to the honeycomb-shaped through holes 2, a honeycomb-shaped ceramic 3 of the present invention was made in the same manner as in Example 1. The performance evaluations on strength, dehumidifying capability and durability of the ceramic 3 are shown in Table 1.

### Examples 4 to 5

Except that potassium titanate fiber (Example 4) and stainless steel fiber (Example 5) were used as inorganic fiber, honeycomb-shaped ceramics 4 and 5 of the present invention were made in the same manner as in Example 1. The performance evaluations on strength, dehumidifying capability and durability of the ceramics 4 and 5 are shown in Table 1.

### Example 6

Except that silica sol and kaolinite were used as inorganic binder, a honeycomb-shaped ceramic 6 of the present invention was made in the same manner as in Example 1. The performance evaluations on strength, dehumidifying capability and durability of the ceramic 6 are shown in Table 1.

### Comparative Example 1

Except that no inorganic fiber was used, a ceramic 7 having a composition shown in table 1 was made in the same manner as in Example 1. The performance evaluations of the ceramic 7 are shown in Table 1.

### Comparative Example 2

Except that no baking under inert and/or reduction atmosphere was given, a ceramic 8 having a composition shown in table 1 was made in the same manner as in Example 1. The performance evaluations of the ceramic 8 are shown in Table 1.

### Comparative Example 3

Except variations in the drying and baking conditions that the molding product was dried by itself at room temperature for one day and that it was not baked under inert and/or reduction atmosphere, a ceramic 9 having a composition shown in Table 1 was made in the same manner as in Example 1. The performance evaluations on the ceramic 9 are shown in Table 1.

### Comparative Example 4

Except that stainless steel fiber was used as inorganic fiber and that no baking under inert and/or reduction atmosphere was given, a ceramic 10 having a composition shown in Table 1 was made in the same manner as in Example 1. The performance evaluations on the ceramic 10 are shown in Table 1.

The above Examples 1-6 and Comparative examples 1-4 clearly show that the ceramics which have undergone the baking under inert and/or reduction atmosphere are superior to those which have not undergone such a baking in every respect of compressive strength and durability.

They also show that the ceramics which have undergone the drying by the hot air blown along the honeycomb-shaped through holes 2 are superior to those which have undergone the natural drying at room temperature (Example 2) and those which have undergone the drying by the hot air blown across or in a direction orthogonal to the through holes (Example 3) on compressive strength.

## Claims

1. A method for producing a ceramic structure which comprises the steps of:
(i) forming a composition containing (a) zeolite, (b) inorganic fiber and (c) inorganic binder;
(ii) shaping the composition into a honeycomb structure (1) comprising a plurality of through holes (2);
(iii) drying the honeycomb structure (1); and
(iv) baking the dry structure
**characterised in that**
the drying step includes blowing hot air through the holes (2) in the honeycomb structure (1); and
the baking step involves baking the structure (1) under an inert and/or a reducing atmosphere and thereafter baking the dry structure under an oxidising atmosphere.

2. A method according to claim 1, wherein the drying step further includes blowing hot air along the outside regions of the honeycomb structure (1).

3. A method according to claim 2, wherein the drying step involves the use of a dryer (5) adapted to regulate the quantity of air passing in the honeycomb structure through holes (2) and the quantity of air passing along the outside regions of the honeycomb structure(1).

4. A method according to any one of claims 1 to 3, wherein the structure is baked under an inert and / or reducing atmosphere at a temperature between 400 and 700°C.

5. A method according to any one of claims 1 to 4, wherein the structure is baked under an oxidising atmosphere at a temperature between 400 and 700°C.

6. A method according to any one of claims 1 to 5, wherein the composition further contains (d) an organic binder.

## Patentansprüche

1. Verfahren zum Herstellen einer Keramikstruktur mit folgenden Schritten:
(i) Erzeugen einer Zusammensetzung, die (a) Zeolith, (b), anorganische Fasern und (c) ein anorganisches Bindemittel enthält,
(ii) Formen der Zusammensetzung zu einer Wabenstruktur (1) mit mehreren Durchgangslöchern (2),
(iii) Trocknen der Wabenstruktur (1), und
(iv) Brennen der getrockneten Struktur,
**dadurch gekennzeichnet**,
daß in dem Trocknungsschritt heiße Luft durch die Löcher (2) in der Wabenstruktur (1) geblasen wird, und
daß in dem Brennschritt die Struktur (1) in einer inerten und/oder reduzierenden Atmosphäre und danach die trockene Struktur in einer oxidierenden Atmosphäre gebrannt wird.

2. Verfahren nach Anspruch 1, wobei in dem Trocknungsschritt heiße Luft längs den Außenbereichen der Wabenstruktur (1) geblasen wird.

3. Verfahren nach Anspruch 2, wobei in dem Trocknungsschritt ein Trockner (5) verwendet wird, der eine Regulierung der die Löcher (2) in der Wabenstruktur durchsetzenden Luftmenge und der längs den Außenbereichen der Wabenstruktur (1) vorbeiströmenden Luftmenge gestattet.

4. Verfahren nach einem der Ansprüche 1 bis 3, wobei die Struktur in einer inerten und/oder reduzierenden Atmosphäre bei einer Temperatur zwischen 400 und 700°C gebrannt wird.

5. Verfahren nach einem der Ansprüche 1 bis 4, wobei die Struktur in einer oxidierenden Atmosphäre bei einer Temperatur zwischen 400 und 700°C gebrannt wird.

6. Verfahren nach einem der Ansprüche 1 bis 5, wobei die Zusammensetzung ferner (d) ein organisches Bindemittel enthält.

## Revendications

1. Méthode de production d'une structure en céramique, comprenant les étapes de :
(i) formation d'une composition contenant (a) une zéolite, (b) une fibre inorganique et (c) un liant inorganique;
(ii) modelage de la composition sous la forme d'une structure en nid d'abeilles (1) comprenant de multiples trous traversants (2);
(iii) séchage de la structure en nid d'abeilles (1); et
(iv) cuisson de la structure sèche
**caractérisée en ce que**
l'étape de séchage comprend le soufflage d'air chaud à travers les trous (2) de la structure en nid d'abeilles (1); et
l'étape de cuisson comprend la cuisson de la structure (1) sous une atmosphère inerte et/ou réductrice et ensuite la cuisson de la structure sèche sous une atmosphère oxydante.

2. Méthode selon la revendication 1, dans laquelle l'étape de séchage comprend également le soufflage d'air chaud le long des zones extérieures de la structure en nid d'abeilles (1).

3. Méthode selon la revendication 2, dans laquelle l'étape de séchage comprend l'utilisation d'un appareil de séchage (5) adapté pour réguler la quantité d'air passant dans les trous traversants (2) de la structure en nid d'abeilles et la quantité d'air passant le long des zones extérieures de la structure en nid d'abeilles (1).

4. Méthode selon l'une quelconque des revendications 1 à 3, dans laquelle la structure est cuite sous une atmosphère inerte et/ou réductrice à une température entre 400 et 700°C.

5. Méthode selon l'une quelconque des revendications 1 à 4, dans laquelle la structure est cuite sous une atmosphère oxydante à une température entre 400 et 700°C.

6. Méthode selon l'une quelconque des revendications 1 à 5, dans laquelle la composition contient également (d) un liant organique.
